# EUROPÄISCHE PATENTANMELDUNG

(11) **EP 0 992 395 A2**
(43) Veröffentlichungstag der Anmeldung: **12.04.2000**
(21) Anmeldenummer: 99116961.6
(22) Anmeldetag: 27.08.1999
(51) Int. Cl.: B60N 3/00

(54) **Tisch für ein Fahrzeug**

(30) Priorität: 30.09.1998 DE 19844805
(71) Anmelder: DaimlerChrysler AG, 70567 Stuttgart (DE)
(72) Erfinder: Selmeier, Paul, 71063 Sindelfingen (DE)

(57) **Zusammenfassung**

Die Erfindung betrifft einen Tisch für ein Fahrzeug, der an einem Fahrzeugbauteil anbringbar ist und in eine Nutzposition gebracht werden kann. Ein derartiger Tisch soll dahingehend ausgestaltet werden, daß der zur Verstauung des Tisches erforderliche Raumbedarf reduziert ist. Dieses Problem wird erfindungsgemäß dadurch gelöst, daß der Tisch eine Tischplatte mit Vorderkante, Hinterkante und zwei Seitenkanten aufweist, wobei die Seitenkanten jeweils an einem Seitenbereich der Tischplatte ausgebildet sind, wobei jeder Seitenbereich um eine in der Tischplatte liegende Schwenkachse zwischen einer Passivstellung, in der der Seitenbereich eben zur Tischplatte verläuft, und einer Aktivstellung schwenkverstellbar ist, in der der Seitenbereich im wesentlichen senkrecht zur Tischplatte verläuft, wobei in der Nutzposition des Tisches die Hinterkante an dem Fahrzeugbauteil gehalten ist, die Vorderkante von dem Fahrzeugbauteil absteht und sich jeder Seitenbereich in seiner Aktivstellung mit einer Außenkante an dem Fahrzeugbauteil abstützt.

## Beschreibung

Die Erfindung betrifft einen Tisch für ein Fahrzeug, der an einem Fahrzeugbauteil anbringbar ist und in eine Nutzposition gebracht werden kann.

Aus der DE 295 02 283 U1 ist eine Schreibplatte bekannt, die nach unten von der Schreibplatte abstehende Halteelemente aufweist, mit denen die Schreibplatte an einem Lenkhandrad eines Kraftfahrzeuges anbringbar ist. Die bekannte Schreibplatte verläuft in ihrer Nutzposition parallel zum Lenkhandrad, das heißt die Schreibplatte ist in der Regel gegenüber der Horizontalen geneigt, so daß sie nicht zum Abstellen von Gegenständen, wie z.B. ein Trinkbecher, geeignet ist. Um Papierblätter auf der Schreibplatte zu fixieren, ist sie mit einer Klemmeinrichtung ausgestattet.

Aus der DB 87 12 540 U1 ist eine Arbeitsplatte bekannt, die ebenfalls am Lenkhandrad eines Fahrzeuges befestigbar ist. Die Arbeitsplatte weist an ihrer Unterseite eine Stütze auf, die sich an einem Lenkradkranz des Lenkhandrades abstützt. Diese Stütze ist dabei in ihrer Länge justierbar, so daß die Arbeitsplatte horizontal ausgerichtet und zur Ablage unterschiedlicher Gegenstände verwendet werden kann. Die Stütze ist umklappbar ausgestaltet, so daß die Arbeitsplatte, wenn sie nicht gebraucht wird, auf dem Lenkradkranz aufgelegt werden kann und dementsprechend parallel zum Lenkhandrad verläuft. Die aus der DE 87 12 540 U1 bekannte Arbeitsplatte weist daher in ihrer Nichtgebrauchslage dieselbe Position auf wie die aus DE 295 02 283 U1 bekannte Schreibplatte in deren Gebrauchslage.

Da bei den bekannten Tischen die Halteelemente nach unten von der Tischplatte abstehen, sind die bekannten Tische relativ sperrig und können nur mit relativ großem Raumbedarf im Fahrzeuginnenraum verstaut werden.

Die vorliegende Erfindung beschäftigt sich mit dem Problem, einen Tisch der eingangs genannten Art dahingehend auszugestalten, daß der zur Verstauung des Tisches erforderliche Raumbedarf reduziert ist.

Dieses Problem wird erfindungsgemäß durch einen Tisch mit den Merkmalen des Anspruches 1 gelöst.

Die Erfindung beruht auf dem allgemeinen Gedanken, an einer Tischplatte Seitenbereiche auszugestalten, die aus einer Passivstellung, in der sie mit der Tischplatte in einer Ebene liegen, in eine Aktivstellung geklappt werden können, in der sie im wesentlichen senkrecht zur Tischplatte verlaufen, wobei diese Seitenbereiche in ihrer Aktivstellung als Querträger dienen, mit denen die Tischplatte an einem Fahrzeugbauteil abstützbar ist.

Da die Seitenbereiche in ihrer Passivstellung lediglich eine Art Verlängerung der Tischplatte bilden, benötigt der erfindungsgemäße Tisch bei in die Ebene der Tischplatte eingeklappten Seitenbereichen einen minimalen Raumbedarf zu seiner Verstauung. Beispielsweise kann der erfindungsgemäße Tisch dann ohne weiteres in üblichen Fahrzeugablagen oder Fächern, wie Türtaschen, Handschuhkasten, Pompadourtaschen, untergebracht werden.

Entsprechend einer vorteilhaften Ausführungsform des erfindungsgemäßen Tisches können die Schwenkachsen, um welche die Seitenbereich bezüglich der Tischplatte schwenkbar sind, so in der Tischplatte liegen, daß sie sich mit den Seitenkanten der Tischplatte schneiden. Auf diese Weise erhält in der Aktivstellung der Seitenbereiche ein von der Tischplatte abgewandter Abschnitt der Außenkante des Seitenbereiches eine Neigung gegenüber der Tischplatte. Insbesondere kann dadurch bei entsprechender Anpassung an das Fahrzeugbauteil, an dem sich die Seitenbereiche abstützen, die Tischplatte im wesentlichen horizontal ausgerichtet werden, so daß sie sich auch zum Abstellen beliebiger Gegenstände eignet.

Bei einer besonders platzsparenden Ausführungsform des erfindungsgemäßen Tisches kann dessen Tischplatte mit den in ihrer Passivstellung befindlichen Seitenbereichen eine gemeinsame Außenkontur aufweisen, die rechteckförmig ist.

Gemäß einer preiswerten Ausführungsform des erfindungsgemäßen Tisches können die Seitenbereiche der Tischplatte einteilig mit dieser hergestellt sein, wobei die Schwenkachsen vorzugsweise als Filmscharniere ausgebildet sind.

Weitere wichtige Merkmale und Vorteile des erfindungsgemäßen Tisches ergeben sich aus den Unteransprüchen, aus den Zeichnungen und aus der zugehörigen Figurenbeschreibung anhand der Zeichnungen.

Es versteht sich, daß die vorstehend genannten und die nachstehend noch zu erläuternden Merkmale nicht nur in der jeweils angegebenen Kombination, sondern auch in anderen Kombination oder in Alleinstellung verwendbar sind, ohne den Rahmen der vorliegenden Erfindung zu verlassen.

Bevorzugte Ausführungsbeispiele der Erfindung sind in den Zeichnungen dargestellt und werden in der nachfolgenden Beschreibung näher erläutert. Es zeigen, jeweils schematisch,
- Fig. 1: eine perspektivische Ansicht auf einen erfindungsgemäßen Tisch mit einer Tischplatte, deren Seitenbereiche sich in einer Passivstellung befinden,
- Fig. 2: eine Ansicht wie Fig. 1, jedoch mit den Seitenbereichen in einer Aktivstellung,
- Fig. 3: eine Seitenansicht auf den erfindungsgemäßen Tisch in dessen Nutzposition bei einer ersten Variante für die Anbringung des Tisches am Fahrzeug,
- Fig. 4: eine Ansicht wie in Fig. 3, jedoch bei einer anderen Variante für die Anbringung des Tisches am Fahrzeug, und
- Fig. 5: eine perspektivische Ansicht einer anderen Ausführungsform des erfindungsgemäßen Tisches, der an einem Lenkhandrad angebracht ist.

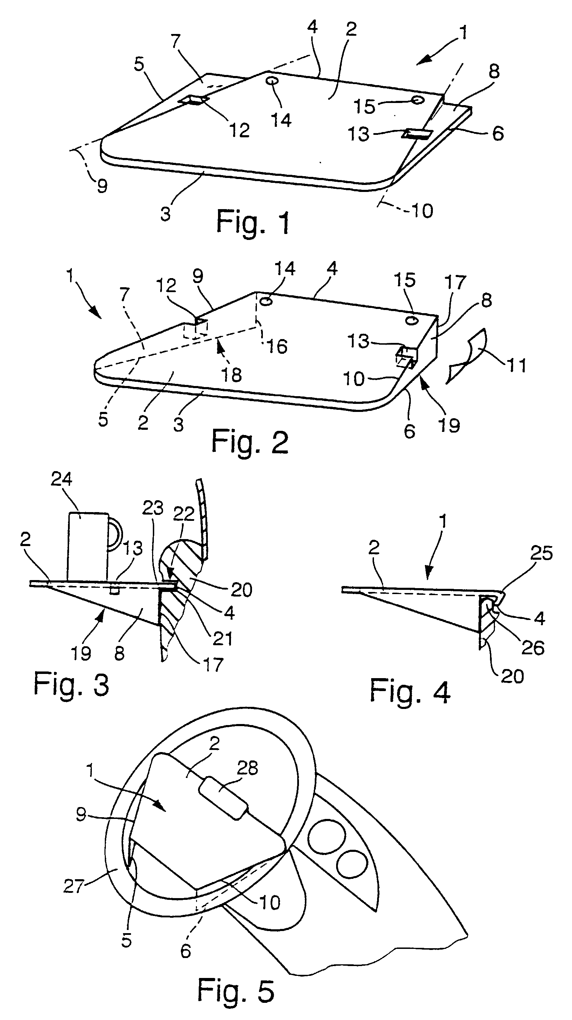

Entsprechend den Fig. 1 und 2 weist ein erfindungsgemäßer Tisch 1 eine Tischplatte 2 auf, die eine Vorderkante 3, eine Hinterkante 4 und zwei Seitenkanten 5 und 6 besitzt.

An zwei den Seitenkanten 5 und 6 zugeordneten Abschnitten der Tischplatte 2 sind zwei Seitenbereiche 7 und 8 ausgebildet, welche die jeweilige Seitenkante 5 bzw. 6 enthalten. Die Anbindung der Seitenbereiche 7 und 8 an die Tischplatte 2 erfolgt jeweils über ein Filmscharnier 9 bzw. 10, durch das jeweils eine Schwenkachse verläuft, um die der jeweilige Seitenbereich 7 bzw. 8 schwenkbar ist.

In Fig. 1 befinden sich die Seitenbereiche 7 und 8 in einer Passivstellung, in der sie in der Ebene der Tischplatte 2 verlaufen und quasi eine seitliche Verlängerung der Tischplatte 2 bilden. In der Passivstellung der Seitenbereiche 7 und 8 weist der erfindungsgemäße Tisch 1 senkrecht zur Ebene der Tischplatte 2 keine Störkonturen auf, so daß der Tisch 1 nur geringe Raumabmessungen aufweist.

Im Unterschied dazu sind die Seitenbereiche 7 und 8 in Fig. 2 in eine Aktivstellung verschwenkt, in der sie im wesentlichen senkrecht zur Ebene der Tischplatte 2 verlaufen. Das Verschwenken bzw. Wegklappen der Seitenbereiche 7 und 8 ist in Fig. 2 für den Seitenbereich 8 mit einen Pfeil 11 symbolisiert.

Die Scharniere bzw. die Schwenkachsen 9 und 10 der Seitenbereiche 7 und 8 verlaufen derart in der Tischplatte 2, daß sie sich jeweils mit der zugeordneten Seitenkante 5 bzw. 6 schneiden. Durch diese Maßnahme erhalten die Seitenbereich 7 und 8 jeweils eine im wesentlichen dreieckige Form. Während die Tischplatte 2 in der Passivstellung der Seitenbereiche 7 und 8 (vgl. Fig. 1) im wesentlichen eine rechteckige Form aufweist, erhält die Tischplatte 2 nach dem Umklappen der dreieckigen Seitenbereiche 7 und 8 in deren Aktivstellung (vgl. Fig. 2) eine im wesentlichen trapezförmige Gestalt. Die Rechteckform der Tischplatte 2 mit passiven Seitenbereichen 7 und 8 minimiert den erforderlichen Stauraum für die Unterbringung des erfindungsgemäßen Tisches 1 in einer entsprechenden Ablage oder dergleichen im Fahrzeug.

Damit die Seitenbereiche 7 und 8 in ihrer Aktivstellung gesichert sind, können Rastmittel 12 und 13 vorgesehen sein, die bei Erreichen der Aktivstellung verrasten. Derartige Rastmittel können beispielsweise in Form von Totpunktrasten ausgebildet sein, wie sie z.B. von Spülmittelflaschen aus Kunststoff bekannt sind.

Um die in den Fig. 1 und 2 dargestellte Ausführungsform des erfindungsgemäßen Tisches 1 an einem nicht dargestellten Fahrzeugbauteil befestigen zu können, sind in einem der Hinterkante 4 zugeordneten Bereich der Tischplatte 2 zwei Öffnungen 14 und 15 ausgebildet, mit deren Hilfe die Tischplatte 2 an am Fahrzeugbauteil angebrachten Haken einhakbar ist. Damit die Tischplatte 2 im eingehakten Zustand nicht nach unten wegklappt, kommen der Hinterkante 4 zugewandte Abschnitte 16 und 17 einer Außenkante 18 bzw. 19 der heruntergeklappten Seitenbereiche 7 und 8 an dem Fahrzeugbauteil zur Anlage, an dem der Tisch 1 eingehakt ist.

Entsprechend Fig. 3 kann bei einer anderen Ausführungsform zur Befestigung des erfindungsgemäßen Tisches 1 in einem Fahrzeugbauteil, hier beispielsweise eine Fahrzeugtüre 20, eine Nut 21 ausgespart sein, in der ein der Hinterkante 4 zugeordneter Abschnitt oder Bereich 22 der Tischplatte 2 fixiert ist. Der in Fig. 3 sichtbare Seitenbereich 8 ist in der dargestellten Aktivstellung heruntergeklappt und stützt mit seinem der Hinterkante 4 zugewandten Abschnitt 17 die Tischplatte 2 an der Tür 20 ab. Damit die Tischplatte 2 in der in Fig. 3 dargestellten Ausführungsform platzsparend verräumt bzw. versorgt werden kann, ist der in der Nut 21 fixierte Abschnitt 22 über ein Filmscharnier 23 mit dem übrigen Abschnitt der Tischplatte 2 verbunden, so daß die Tischplatte 2 bei in deren Passivstellung verstellten Seitenbereichen 7 und 8 nach unten weggeklappt werden kann. Die Neigung des der Hinterkante 4 zugewandten Abschnittes 17 der Außenkontur 19 des heruntergeklappten Seitenbereiches 8 ist entsprechend Fig. 3 so gewählt, daß dieser Abschnitt 17 dann am Fahrzeugbauteil 20 zur Anlage kommt, wenn die Tischplatte 2 im wesentlichen horizontal ausgerichtet ist. Eine horizontale Tischplatte 2 eignet sich insbesondere zum Abstellen beliebiger Gegenstände, wie z.B. einer Henkeltasse 24.

Bei einer anderen Ausführungsform entsprechend Fig. 4 kann ein die Hinterkante 4 enthaltender Abschnitt 25 der Tischplatte 2 hakenförmig ausgebildet sein, der mit einem entsprechenden Absatz 26 im Fahrzeugbauteil, z.B. im Armaturenbrett des Fahrzeuges, zusammenwirkt, um den Tisch 1 zu befestigen.

Insbesondere mit dem hakenartig ausgebildeten Abschnitt 25 kann der erfindungsgemäße Tisch 1 auch zur Anbringung an einer Fahrzeugaußenseite ausgebildet sein. Beispielsweise kann der Absatz 26 durch einen Fensterrahmen gebildet sein.

Eine derartige Anwendung ist beispielsweise für Camping oder für ein Picknick vorteilhaft.

Entsprechend Fig. 5 kann bei einer anderen Ausführungsform der erfindungsgemäße Tisch 1 in ein Lenkhandrad 27 integriert bzw. daran angebracht sein. Dabei kann durch die Anordnung der Schwenkachsen bzw. der Scharniere 9 und 10 die Neigung der Seitenkanten 5 und 6 derart gewählt werden, daß sich in der Nutzposition des Tisches 1 eine im wesentlichen horizontal verlaufende Tischplatte 2 ergibt.

Im Bereich der Hinterkante 4 kann auf der Oberseite der Tischplatte 2 eine Klemmeinrichtung 28 vorgesehen sein, mit deren Hilfe Papierblätter oder dergleichen auf der Tischplatte 2 fixiert werden können.

## Patentansprüche

1. Tisch für ein Fahrzeug
**mit folgenden Merkmalen:**
- der Tisch (1) weist eine Tischplatte (2) auf,
- die Tischplatte (2) weist eine Vorderkante (3), eine Hinterkante (4) und zwei Seitenkanten (5, 6) auf,
- die Seitenkanten (5, 6) sind jeweils an einem Seitenbereich (7, 8) der Tischplatte (2) ausgebildet,
- jeder Seitehbereich (7, 8) ist um eine Schwenkachse (9, 10) schwenkbar,
- die Schwenkachse (9, 10) jedes Seitenbereiches (7, 8) liegt in der Tischplatte (2),
- jeder Seitenbereich (7, 8) ist zwischen einer Passivstellung und einer Aktivstellung schwenkverstellbar,
- in der Passivstellung verläuft der Seitenbereich (7, 8) eben zur Tischplatte (2),
- in der Aktivstellung verläuft der Seitenbereich (7, 8) im wesentlichen senkrecht zur Tischplatte (2),
- in einer Nutzposition des Tisches ist die Hinterkante (4) an einem Fahrzeugbauteil (20) gehalten, steht die Vorderkante (3) von dem Fahrzeugbauteil (20) ab und stützt sich jeder Seitenbereich (7, 8) in seiner Aktivstellung mit einer Außenkante (18, 19) an dem Fahrzeugbauteil (20) ab.

2. Tisch nach Anspruch 1,
**dadurch gekennzeichnet,**
daß in der Passivstellung der Seitenbereiche (7, 8) die gemeinsame Außenkontur der Tischplatte (2) und der Seitenbereiche (7, 8) im wesentlichen rechteckig ist.

3. Tisch nach Anspruch 1 oder 2,
**dadurch gekennzeichnet,**
daß die Schwenkachse (9, 10) des Seitenbereiches (7, 8) die jeweils zugeordnete Seitenkante (5, 6) schneidet.

4. Tisch nach den Ansprüchen 2 und 3,
**dadurch gekennzeichnet,**
daß in der Aktivstellung der Seitenbereiche (7, 8) die Außenkontur der Tischplatte (2) im wesentlichen trapezförmig ist und die Außenkontur der Seitenbereiche (7, 8) jeweils im wesentlichen dreieckig ist.

5. Tischplatte nach einem der Ansprüche 1 bis 4,
**dadurch gekennzeichnet,**
daß die Hinterkante (4) an einem Hinterkantenbereich (22) ausgebildet ist, der um eine Schwenkachse (23) parallel zur Hinterkante (4) schwenkbar ist und an dem Fahrzeugbauteil (20) befestigt ist.

6. Tischplatte nach einem der Ansprüche 1 bis 4,
**dadurch gekennzeichnet,**
daß die Hinterkante (4) der Tischplatte (2) als Hakenelement (25) ausgebildet ist, das am Fahrzeugbauteil (20) durch Einhaken anbringbar ist.

7. Tisch nach einem der vorhergehenden Ansprüche,
**dadurch gekennzeichnet,**
daß sich jeder Seitenbereich (7, 8) jeweils mit einem der Hinterkante (4) der Tischplatte (2) zugeordneten Abschnitt (16, 17) der Außenkante (18, 19) am Fahrzeugbauteil (20) abstützt.

8. Tisch nach einem der vorhergehenden Ansprüche,
**dadurch gekennzeichnet,**
daß sich jeder Seitenbereich (7, 8) jeweils mit einem der jeweiligen Seitenkante (5, 6) der Tischplatte (2) zugeordneten Abschnitt der Außenkante (18, 19) am Fahrzeugbauteil (20) abstützt.

9. Tisch nach einem der vorhergehenden Ansprüche,
**dadurch gekennzeichnet,**
daß in die Tischplatte (2) ein Cup-Holder integriert ist.

10. Tisch nach einem der vorhergehenden Ansprüche,
**dadurch gekennzeichnet,**
daß der Tisch (1) einteilig hergestellt ist, wobei die Schwenkachsen in Form von Filmscharnieren (9, 10) ausgebildet sind.

11. Tisch nach einem der vorhergehenden Ansprüche,
**dadurch gekennzeichnet,**
daß Sicherungsmittel (12, 13) vorgesehen sind, mit denen die Seitenbereiche (7, 8) in ihrer Aktivstellung sicherbar sind.

12. Tisch nach einem der vorhergehenden Ansprüche,
**dadurch gekennzeichnet,**
daß in einem der Hinterkante (4) zugeordneten Bereich der Tischplatte (2) eine Klemmeinrichtung (28) angeordnet ist, die zum Fixieren von Papierblättern verwendbar ist.

13. Tisch nach einem der vorhergehenden Ansprüche,
**dadurch gekennzeichnet,**
daß im Fahrzeugbauteil (20) eine schlitzartige Öffnung enthalten ist, durch die die Tischplatte (2) mit in deren Passivstellung verstellten Seitenbereichen (7, 8) in einen vom Fahrzeuginnenraum abgewandten Stauraum des Fahrzeugbauteiles (20) einbringbar ist.

14. Tisch nach einem der vorhergehenden Ansprüche,
**dadurch gekennzeichnet,**
daß das Fahrzeugbauteil (20), an dem die Hinterkante (4) der Tischplatte (2) in der Nutzposition des Tisches (1) gehalten ist, ein Lenkhandrad (27) ist.
